# EUROPEAN PATENT APPLICATION

(11) **EP 3 562 005 A1**
(43) Date of publication of application: **30.10.2019**
(21) Application number: 18169418.3
(22) Date of filing: 26.04.2018
(51) Int. Cl.: H02K 11/25, H02K 1/27, F03D 9/25, F03D 80/80

(54) **TEMPERATURE MEASUREMENT FOR ELECTRIC GENERATOR**

(71) Applicant: Siemens Gamesa Renewable Energy A/S, 7330 Brande (DK)
(72) Inventor: Airoldi, Giovanni, 8000 Aarhus (DK)
(74) Representative: Aspacher, Karl-Georg

(57) **Abstract**

An electric generator (11) comprises:
- a stator (20) axially extending along a rotational axis (Y) of the electric generator (11) between a first axial end (12) and a second axial end (13),
- a rotor (30) axially extending along the axis (Y) and including at least a magnet (19, 19a, 19b) axially between the first axial end (12) and a second axial end (13),
- a temperature sensor (50) for measuring the temperature of the at least one magnet (19, 19a, 19b) in a measuring position (P) intermediate between the first axial end (12) and the second axial end (13).

## Description

### Field of invention

The present invention relates to a device for measuring the temperature in an electric generator. The present invention further relates to a method for operating an electric generator. In particular, the present invention applies to electric generators included in wind turbines.

### Art Background

Electric generators of the kind above and methods for operating them are generally known. In particular, it is known to control that predefined threshold temperatures are not reached.

Large direct drive wind turbines including two electric power converters connected to the electric generator are also known.

In such installations, due to the way the converters are connected to the generator, when one of the converters is not active, eddy current losses arise in the generator rotor, causing the magnet temperature to increase significantly.

These losses are partly removed by the wind to the outer environment, but the greater fraction of losses is removed by convection on the magnet surface by the air circulated inside the generator.

In the electric generator, cooling air flows in the air gap between the stator and the rotor. The air enters at its lowest temperature at the axial entrance of the air gap, then the more heat it collects, the warmer it becomes. Additionally, the further the air travels axially in the air gap, the lower is the flow rate, as air exits the air ducts radially towards the cavity in the center of the stator. As a consequence of higher air temperature and lower air flow rate towards the center of the generator, the temperature of the permanent magnets along the rotational axis of the electrical generator reaches the highest values at the center and lowest at both entrances of the air gap. In operational turbines the temperature of magnets is normally measured only in one location, i.e. which is at the axial entrance of the air gap.

The magnet temperature at the center of the generator is estimated by adding a constant value to the temperature measured on the magnets at the air gap entrance. The sum of the measured value and the constant is compared with a threshold safe value which has not to be reached. Whenever this threshold value is reached by the above defined sum, the turbine starts de-rating to keep temperatures below dangerous or undesired values.

However, the difference between the temperature in the axial center of the magnets and the one measured at the axial air gap entrance is not constant but depends on the power output and on the wind speed. Typically, a maximum value which is estimated for such difference is chosen as the constant to be added to the temperature measured on the magnets at the air gap entrance. Such choice is obviously conservative, but it may be for some working conditions, e.g. the turbines having two converters of which one is not active, unnecessarily limiting for the power output.

It is therefore still needed to provide an electric generator, where the power output can be optimized without at the same time exceeding predefined threshold values for temperatures during operation, in particular in the permanent magnets.

### Summary of the Invention

This need may be met by the subject matter according to the independent claims. Advantageous embodiments of the present invention are described by the dependent claims.

According to a first aspect of the invention, an electric generator is provided. The electric generator comprises:
- a stator axially extending along a rotational axis of the electric generator between a first axial end and a second axial end,
- a rotor axially extending along the axis and including at least a magnet axially between the first axial end and a second axial end,
- a temperature sensor for measuring the temperature of the at least one magnet in a measuring position intermediate between the first axial end and the second axial end.

The above described electric generator may be advantageously integrated in a wind turbine, in particular a wind turbine having at least two electric power converters.

According to a second aspect of the invention, it is provided a method for operating an electric generator for a wind turbine, the electric generator comprising:
- a stator axially extending along a rotational axis of the electric generator between a first axial end and a second axial end,
- a rotor axially extending along the axis and including at least a magnet axially between the first axial end and a second axial end.

The method comprises the steps of:
- measuring the temperature of the at least one magnet in a measuring position intermediate between the first axial end and the second axial end,
- limiting the output power of the electric generator when a threshold value of the temperature in the at least one magnet is reached.

In wind turbines comprising two or more electric power converters connected to the electric generator, the method is activated when only one of the two electrical power converters is in operation, to avoid eddy current losses arising excessively in the generator rotor.

Advantageously, according to the present invention, instead of calculating the magnet temperature at the center of the generator, as performed in the above described solutions of the prior art, the temperature is directly measured by a temperature sensor installed in a measuring position intermediate between the first axial end and the second axial end of the stator. The exact temperature of the magnet(s) will allow de-rating the turbine based on the real temperature of the magnet(s), thus increasing the power output of the turbine, with respect to the above described solutions of the prior art.

According to embodiments of the present invention, the rotor includes a plurality of magnets disposed in a row between the first axial end and a second axial end, said temperature sensor being disposed in the measuring position for measuring the temperature in an intermediate magnet of the plurality of magnets.

According to embodiments of the present invention, the temperature sensor may of the contactless type and fixed to the stator, facing the portion of the magnet, whose temperature is to be measured. The temperature sensor may at least partially extend in the air gap comprised between the stator and the rotor, without contacting the rotor.

Particularly, the temperature sensor may be of the infrared type.

Advantageously, the present invention allows measuring the temperature of the magnets in accessible an area which is difficult to access, through contactless infrared sensors.

According to embodiments of the present invention, the at least one magnet comprises an exterior surface at the measuring position, the emissivity of the exterior surface allowing the measurement of the temperature of the at least one magnet by the temperature sensor. In particular, the at least one magnet may comprise a covering on the exterior surface providing the desired emissivity.
The exterior surface of the magnet or portion of magnet, whose temperature is to be measured, provides an emissivity, which allows a correct temperature measurement, in contrast with the surface of the magnets or portion of magnet, whose temperatures are not of interest and consequently can be made of reflective material (i.e. stainless steel).

It has to be noted that embodiments of the invention have been described with reference to different subject matters. In particular, some embodiments have been described with reference to method type claims whereas other embodiments have been described with reference to apparatus (electric generator) type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including a stator for a wind turbine according to the present invention.
- Figure 2: shows a schematic axial section of an exemplary electric generator according to the present invention.
- Figure 3: shows a graph illustrating the power output performances of an exemplary electric generator according to the present invention, compared to the power output performances of an exemplary electric generator according to the prior art.

### Detailed Description

The illustrations in the drawings are schematic. It is noted that in different figures, similar or identical elements are provided with the same reference signs.

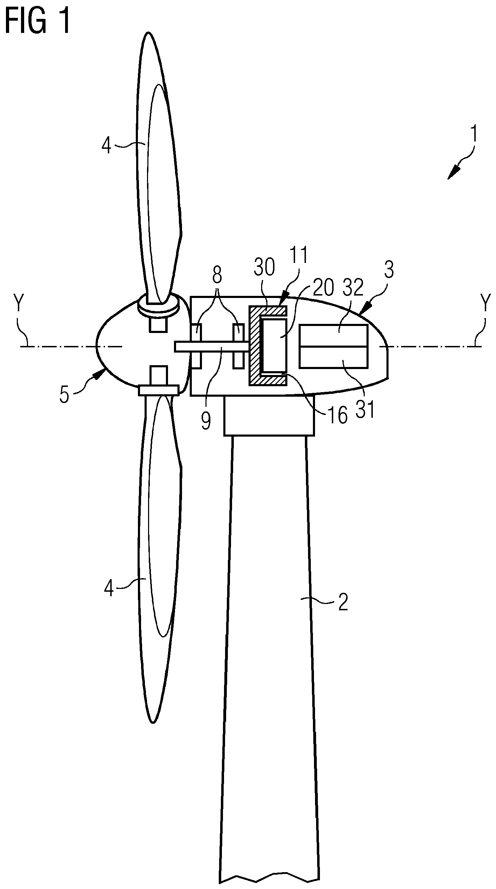

**Figure 1** shows a wind turbine 1 according to the invention. The wind turbine 1 comprises a tower 2, which is mounted on a non-depicted fundament. A nacelle 3 is arranged on top of the tower 2.
The wind turbine 1 further comprises a wind rotor 5 having two, three or more blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y. The blades 4 extend radially with respect to the rotational axis Y.
The wind turbine 1 comprises an electric generator 11 connected to two electric power converters 31, 32.
The wind rotor 5 is rotationally coupled with the electric generator 11 by means of a rotatable main shaft 9.
According to other possible embodiments of the present invention (not represented in the attached figures), the wind rotor 5 is rotationally coupled directly with the electric generator 11 (direct-drive generator configuration).

A schematically depicted bearing assembly 8 is provided in order to hold in place the rotor 5. The rotatable main shaft 9 extends along the rotational axis Y. The electric generator 11 includes a stator 20 and a rotor 30. The rotor 30 is radially external to the stator 20 and is rotatable with respect to the stator 30 about the rotational axis Y. According to other embodiments of the present invention (not shown) the rotor is radially internal to the stator 11.
The rotor and the stator are separated by an air gap 25. According to other possible embodiments of the present invention (not represented in the attached figures), the present invention can be applied to an electric generator, which is not comprised in a wind turbine.

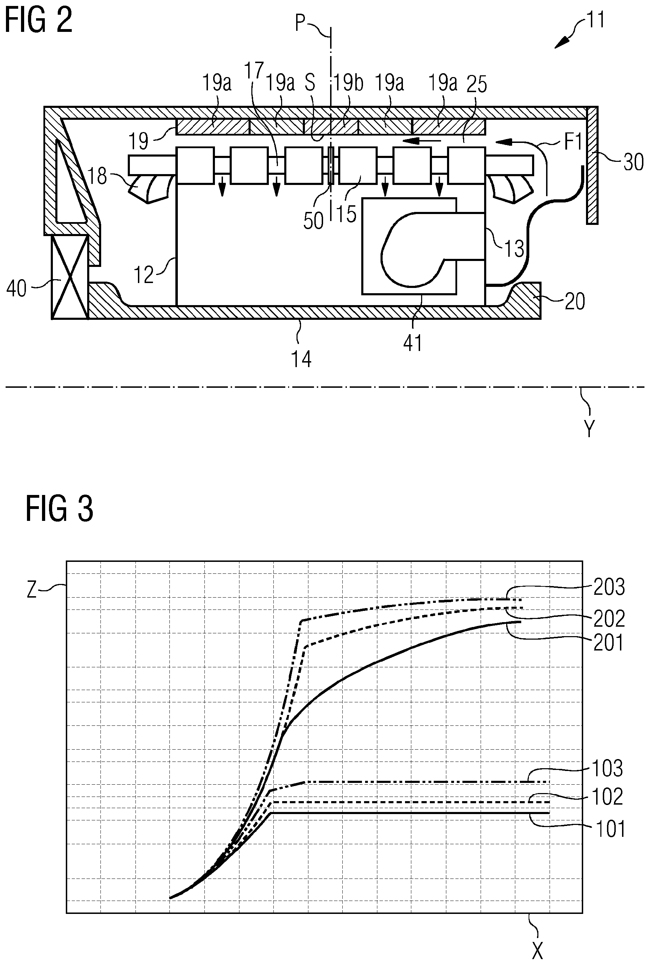

**Figure 2** shows a schematic axial section of the electric generator 11.
With respect to the rotational axis Y, the stator 20 extends:
- axially between a first axial end 12 and a second axial end 13;
- radially between an inner circumferential surface 14 and an outer circumferential surface 15.
Close to the outer circumferential surface 15, the stator 20 includes a plurality of coils 17, connected, at the axial ends 12, 13, by a plurality of end-windings 18.
The rotor 30 also axially extends between a first axial end 12 and a second axial end 13. The rotor 30 surrounds the stator 20 and includes a permanent magnet assembly 19 having a plurality of permanent magnets 19a, 19b separated from the outer circumferential surface 15 of the stator 20 by the rotor-stator air gap 25. The permanent magnets 19a, 19b are disposed in an axial row extending between the first axial end 12 and the second axial end 13.
A bearing 40 is mounted between the rotor 30 and the stator 20 for allowing the rotation of the rotor around the rotational axis Y.
According to other possible embodiments (not shown), the rotor comprise only one permanent magnet 19 extending between the first axial end 12 and the second axial end 13.
The electric generator 11 comprises a cooling fan 41. In its active state, the cooling fan 41 generates an air flow F1 through the electric generator 11, which works as cooling medium flows for cooling the end-windings 18 and the permanent magnets 19a, 19b. The air flow F1 is directed towards the first axial end 12 and the second axial end 13, at which the air flow F1 axially enters the air gap 25. According to other possible embodiments (not shown), the electric generator 11 may comprise a different number of cooling fans.
The electric generator 11 comprises a temperature sensor 50 for measuring the temperature of an intermediate magnet 19b in a measuring position P intermediate between the first axial end 12 and the second axial end 13.
According to one embodiment of the present invention, the measuring position P is equally distanced from the first axial end 12 and the second axial end 13.
In the embodiment where only one permanent magnet 19 is present, the measuring position P corresponds to an intermediate portion 19b of the permanent magnet 19, intermediate between the first axial end 12 and the second axial end 13.
The temperature sensor 50 is of the contactless infrared type and is fixed to the stator 20. The temperature sensor 50 extends partially in the air gap 25, without contacting the intermediate magnet (or magnet portion) 19b, whose temperature has to be measured.
The intermediate magnet (or magnet portion) 19b, whose temperature has to be measured, comprises an exterior surface S at the measuring position P, the emissivity of the exterior surface allowing the measurement of the temperature of intermediate magnet (or magnet portion) 19b. Such property of the exterior surface S may be provided through a covering. The other permanent magnets 19a of the plurality of permanent magnets 19a, 19b may be equal to the intermediate magnet 19b or have a conventional, e.g. stainless steel, exterior surface.

**Figure 3** shows a graph illustrating the improvements in power output performances of the present invention, compared to the prior art.
In the graph the abscissa X represents the wind speed, the ordinate Z the power output of the electric generator 11 of the wind turbine.
Curves 101, 102, 103 are obtained with a prior art method of temperature estimation in the permanent magnet which comprises the steps of:
- measuring the temperature at the first axial end or at the second axial end of the stator, in particular in the air gap,
- adding a constant value to the measured temperature for estimating the temperature in the magnet in an intermediate point between the first axial end and the second axial end,
- comparing the above calculated sum with a threshold safe value Tt of temperature,
- whenever this threshold value is reached by the above defined sum, the turbine starts de-rating to keep temperatures below dangerous or undesired values.
Curves 101, 102, 103 respectively corresponds to three different ambient temperatures T1, T2 and T3, where T1 is greater than T2 and T2 is greater than T3.
Curves 201, 202, 203 respectively corresponds to the same three different ambient temperatures T1, T2 and T3, respectively, but are obtained with the method of operating the electric generator 11 according to the present invention, i.e. through the following steps:
- measuring the temperature of the magnet or portion of magnet 19b in the measuring position P, intermediate between the first axial end 12 and the second axial end 13,
- limiting the output power of the electric generator 11 when the threshold value Tt of the temperature in the magnet or portion of magnet 19b is reached.
Curves 201, 202, 203 reach significantly higher power values than the respectively correspondent curves 101, 102, 103.

## Claims

1. Electric generator (11) comprising:
- a stator (20) axially extending along a rotational axis (Y) of the electric generator (11) between a first axial end (12) and a second axial end (13),
- a rotor (30) axially extending along the axis (Y) and including at least a magnet (19, 19a, 19b) axially between the first axial end (12) and a second axial end (13),
- a temperature sensor (50) for measuring the temperature of the at least one magnet (19, 19a, 19b) in a measuring position (P) intermediate between the first axial end (12) and the second axial end (13).

2. Electric generator (11) as claimed in claim 1, wherein the rotor (30) includes a plurality of magnets (19a, 19b) disposed in a row between the first axial end (12) and a second axial end (13), said temperature sensor (50) being disposed in the measuring position (P) for measuring the temperature in an intermediate magnet (19b) of the plurality of magnets (19a, 19b).

3. Electric generator (11) as claimed in claim 1 or 2, wherein the temperature sensor (50) is of the contactless type and is fixed to the stator (20).

4. Electric generator (11) as claimed in claim 3, wherein the temperature sensor (50) at least partially extends in the air gap (25) comprised between the stator (20) and the rotor (30).

5. Electric generator (11) as claimed in claim 3 or 4, wherein the temperature sensor (50) is of the infrared type.

6. Electric generator (11) as claimed in claim 3 or 4 or 5, wherein the at least one magnet (19, 19a, 19b) comprises an exterior surface (S) at the measuring position (P), the emissivity of the exterior surface allowing the measurement of the temperature of the at least one magnet (19, 19a, 19b) by the temperature sensor (50).

7. Electric generator (11) as claimed in claim 6, wherein the at least one magnet comprises a covering on the exterior surface (S) providing the desired emissivity.

8. Electric generator (11) as claimed in any of the previous claims, wherein the measuring position (P) is equally distanced from the first axial end (12) and the second axial end (13).

9. Wind turbine (1) comprising an electric generator (11) according to any of the previous claims.

10. Wind turbine (1) as claimed in claim 9, further comprising at least two electrical power converters (31, 32) connected to the electric generator (11).

11. Method of operating an electric generator (11) for a wind turbine (1), the electric generator (11) comprising:
- a stator (20) axially extending along a rotational axis (Y) of the electric generator (11) between a first axial end (12) and a second axial end (13),
- a rotor (30) axially extending along the axis (Y) and including at least a magnet (19, 19a, 19b) axially between the first axial end (12) and a second axial end (13),
the method comprising the steps of:
- measuring the temperature of the at least one magnet (19, 19a, 19b) in a measuring position (P) intermediate between the first axial end (12) and the second axial end (13),
- limiting the output power of the electric generator (11) when a threshold value of the temperature in the at least one magnet (19, 19a, 19b) is reached.

12. Method of operating an electric generator (11) for a wind turbine (1) as claimed in claim 11, wherein the wind turbine (1) comprises at least two electric power converters (31, 32) connected to the electric generator (11), wherein the method is activated when only one of the two electrical power converters (31, 32) is in operation.
